# EUROPEAN PATENT SPECIFICATION

(11) **EP 2 810 010 B1**
(45) Date of publication and mention of the grant of the patent: **15.11.2017**
(21) Application number: 13703274.4
(22) Date of filing: 29.01.2013
(51) Int. Cl.: F28D 1/04, F28F 17/00

(54) **MULTIPLE TUBE BANK HEAT EXCHANGER ASSEMBLY AND FABRICATION METHOD**
MEHRFACHROHRBÜNDELWÄRMETAUSCHERANORDNUNG UND HERSTELLUNGSVERFAHREN
ENSEMBLE ÉCHANGEUR DE CHALEUR À FAISCEAUX DE TUBES MULTIPLEX ET PROCÉDÉ DE FABRICATION

(30) Priority: 02.02.2012 US 201261593979 P
(43) Date of publication of application: 10.12.2014
(73) Proprietor: Carrier Corporation, Farmington, CT 06034 (US)
(72) Inventor: TARAS, Michael, F., Fayetteville, NY 13066 (US); JOARDAR, Arindom, East Syracuse, New York 13057 (US); WOLDESEMAYAT, Mel, Liverpool, New York 13090 (US); POPLAWSKI, Bruce, J., Mattydale, New York 13211 (US)
(74) Representative: Schmitt-Nilson Schraud Waibel Wohlfrom Patentanwälte Partnerschaft mbB
(86) International application number: PCT/US2013/023533
(87) International publication number: WO 2013/116178

(56) References cited:
- EP-A2- 1 840 494
- DE-A1- 10 150 213

## Description

### Background of the Invention

This invention relates generally to heat exchangers and, more particularly, to multiple tube bank flattened tube and fin heat exchangers as defined in the preamble of claims 1 and 9, and a method for fabrication thereof. DE10150213 discloses a a heat exchange tube assembly having the features in the preamble of claims 1 and 9.

Heat exchangers have long been used as evaporators and condensers in heating, ventilating, air conditioning and refrigeration (HVACR) applications. Historically, these heat exchangers have been round tube and plate fin (RTPF) heat exchangers. However, all aluminum flattened tube plate fin heat exchangers are finding increasingly wider use in industry, including the HVACR industry, due to their compactness, thermal-hydraulic performance, structural rigidity, lower weight and reduced refrigerant charge, in comparison to conventional RTPF heat exchangers.

A typical flattened tube plate fin heat exchanger includes a first manifold, a second manifold, and a single tube bank formed of a plurality of longitudinally extending flattened heat exchange tubes disposed in spaced parallel relationship and extending between the first manifold and the second manifold. The first manifold, second manifold and tube bank assembly is commonly referred to in the heat exchanger art as a slab. Additionally, a plurality of fins are disposed between the neighboring pairs of heat exchange tubes for increasing heat transfer between a fluid, commonly air in HVACR applications, flowing over the outer surface of the flattened tubes and along the fin surfaces and a fluid, commonly refrigerant in HVACR applications, flowing inside the flattened tubes. Such single tube bank heat exchangers, also known as single slab heat exchangers, have a pure cross-flow configuration. Double bank flattened tube and fin heat exchangers are also known in the art. In conventional double bank flattened tube and fin heat exchangers are typically formed of two conventional fin and tube slabs, one spaced behind the other, with fluid communication between the manifolds accomplished through external piping. However, to connect the two slabs in fluid flow communication in other than a parallel cross flow arrangement requires complex external piping. Flattened tubes commonly used in HVACR applications typically have an interior subdivided into a plurality of parallel flow channels. Such flattened tubes are commonly referred to in the art as multi-channel tubes, mini-channel tubes or micro-channel tubes.

A concern associated with the use of flattened tube heat exchangers as condensers in HVACR applications is poor drainage of retained condensate or water from the external surfaces of the flattened tubes and associated fins. The retention of condensate/water can be particularly problematic in flattened tube heat exchangers having horizontal tubes with high fin density and close tube spacing. In such constructions, condensate/water tends to collect on the flat horizontal surfaces of the heat exchange tubes in the spaces between the densely packed fins.

### Summary of the Invention

A multiple bank, flattened tube heat exchanger is provided that is substantially free draining of condensate/water off the horizontal flat surface of the flattened horizontally extending flattened heat exchange tubes, while also achieving enhanced thermal performance. A multiple bank, flattened tube finned heat exchanger of simplified construction and a method for fabricating the heat exchanger are provided.

In an embodiment, a multiple bank, flattened tube finned heat exchange unit includes: a first tube bank including at least first and second flattened tube segments extending longitudinally in spaced parallel relationship; and a second tube bank including at least first and second flattened tube segments extending longitudinally in spaced parallel relationship, the second tube bank disposed behind and in alignment with the first tube bank with a leading edge of the second tube bank disposed at a spacing from a trailing edge of the first tube bank. Each tube segment of the second tube bank is connected by a web member to a respective one of the tube segments of the first tube bank. Each web member has at least one condensate drainage hole extending positioned off-centered to be in proximity of the trailing edge of an adjacent heat exchange tube segment or in the proximity of the leading edge of an adjacent heat exchange tube segment. The heat exchanger may further include a plurality of heat transfer fins extending between the first and second flattened tube segments of both of the first tube bank and the second tube bank and spanning the spacing between the trailing edge of the first tube bank and the leading edge of the second tube bank. In an embodiment, the plurality of fins extending between the first and second tube segments of both the first tube bank and the second tube bank may be formed as a continuous ribbon-like folded fin plate.

In a further aspect, a method is provided for fabricating a flattened tube finned heat exchange unit having a first tube bank and a second tube bank. The method includes the steps of: forming a plurality of longitudinally extending integral flattened heat exchange tube segment assemblies, each integral tube segment assembly including a forward tube segment and an aft tube segment connected by a web member extending between a trailing edge of the forward tube segment and a leading edge of the aft tube segment; assembling the plurality of integral flattened heat exchange tube segment assemblies in a parallel array in spaced EP 1 840 494 A2 discloses a heat exchange section made ofAl or an Al-alloy, especially for high pressure climatization components, consisting of a one piece extruded composite profile with at least two flat tubes of the same or different internal and external geometry and connected by a bridge. In the longitudinal direction of the composite profile the bridge is directly adjacent to the side wall of the flat tube which has a narrowing of a thickness less than that of bridge and less than that of sidewall.
relationship with a continuous folded fin disposed between each pair of parallel integrated flattened heat exchange tube segment assemblies to form a partially assembled fin and tube pack; mounting a first manifold to a respective first end of each of the aft tube segments of the plurality of integrated flattened heat exchange tube segment assemblies; mounting a second manifold to a respective second end of each of the aft tube segments of the plurality of integrated flattened heat exchange tube segment assemblies; mounting a third manifold to a respective second end of each of the forward tube segments of the plurality of integral flattened heat exchange tube segment assemblies; mounting a fourth manifold to a respective first end of each of the forward tube segments of the plurality of integral flattened heat exchange tube segment assemblies, thereby forming a final assembly; and bonding the final assembly by brazing in a brazing furnace.

### Brief Description of the Drawings

For a further understanding of the disclosure, reference will be made to the following detailed description which is to be read in connection with the accompanying drawing, where:
FIG. 1 is a diagrammatic illustration of an embodiment of a multiple tube bank, flattened tube finned heat exchange unit as disclosed herein;
FIG. 2 is an end elevation view of a generally V-shaped arrangement of a heat exchanger incorporating a double tube bank, flattened tube finned heat exchange unit as disclosed herein;
FIG. 3 is a side elevation view, partly in section, illustrating an embodiment of a fin and a set of integral flattened tube segment assemblies of the heat exchange unit of FIG. 1;
FIG. 4 is a side elevation view, partly in section, illustrating another embodiment of a fin and a set of integral flattened tube segment assemblies of the heat exchange unit of FIG. 1;
FIG. 5 is a side elevation view, partly in section, illustrating another embodiment of a fin and a set of integral flattened tube segment assemblies of the heat exchange unit of FIG. 1;
FIGs. 6A and 6B are top plan views of the integral flattened tube assembly of FIG. 5 showing alternate embodiments of the web member;
FIG. 7A is a top plan view of a single pass, multiple pass counter crossflow embodiment of the heat exchange cell of FIG. 1;
FIG. 7B is a top plan view of a single pass, single pass counter crossflow embodiment of another embodiment of the heat exchange unit disposed herein;
FIG. 8 is a sectioned plan view of an embodiment of a fabrication assembly of the manifolds at the intermediate side of the heat exchange unit of FIG. 1;
FIG. 9 is a sectioned plan view of another embodiment of a fabrication of the manifolds at the intermediate side of the heat exchange unit of FIG. 1;
FIG, 10 is a sectioned plan view of an embodiment of an integral manifold assembly formed as a one-piece extrusion;
FIG. 11 is a sectioned plan view of another embodiment of an integral manifold assembly; and
FIG. 12 is a sectioned perspective view of a multiple heat exchange tube assembly in accordance with the disclosure having three aligned heat exchanged tube segments.

### Detailed Description

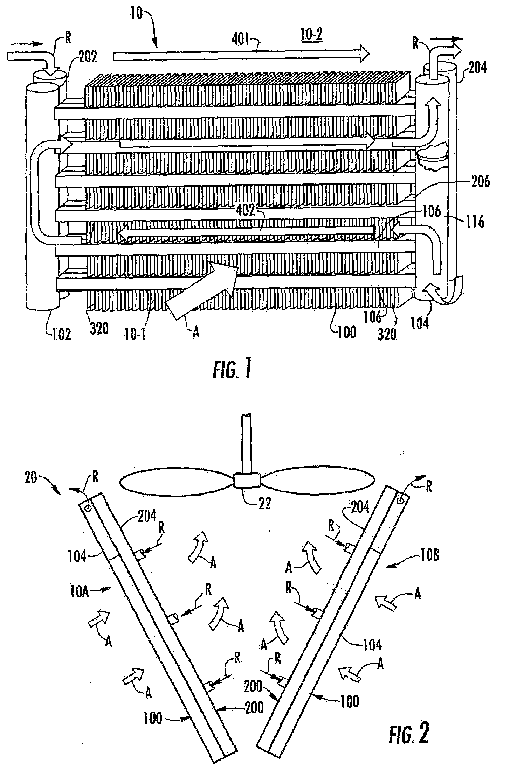

There is depicted in perspective illustration in FIG. 1, an exemplary embodiment of a multiple bank flattened tube finned heat exchanger unit 10 in accordance with the disclosure. As depicted therein, the multiple bank flattened tube finned heat exchanger 10 includes a first tube bank 100 and a second tube bank 200 that is disposed behind the first tube bank 100, that is downstream with respect to air flow, A, through the heat exchanger. The first tube bank 100 may also be referred to herein as the front heat exchanger slab 100 and the second tube bank 200 may also be referred to herein as the rear heat exchanger slab 200.

In FIG. 2 an exemplary embodiment of a refrigerant condenser 20 that includes a pair of multiple bank flatten tube finned heat exchange units 10A, 10B, disposed in a generally V-shaped arrangement, and an associated air moving device, for example fan 22 for drawing a flow of a cooling media, for example ambient air, A, through the heat exchange units 10A, 10B, in heat exchange relationship with a flow of refrigerant, R, passing through the flattened tube segments of the heat exchange units 10A, 10B. The lower end of each heat exchange unit 10A, 10B is disposed at the bottom of the V-shaped arrangement and the upper end of each heat exchange unit 10A, 10B is disposed at top of the V-shaped arrangement.

The first tube bank 100 includes a first manifold 102, a second manifold 104 spaced apart from the first manifold 102, and a plurality of heat exchange tube segments 106, including at least a first and a second tube segment, extending longitudinally in spaced parallel relationship between and connecting the first manifold 102 and the second manifold 104 in fluid communication. The second tube bank 200 includes a first manifold 202, a second manifold 204 spaced apart from the first manifold 202, and a plurality of heat exchange tube segments 206, including at least a first and a second tube segment, extending longitudinally in spaced parallel relationship between and connecting the first manifold 202 and the second manifold 204 in fluid communication. Each manifold may be a separate manifold or the paired manifolds 102, 202 and 104, 204 at either side, or at both sides, of the dual bank heat exchanger 10 may formed as separate chambers within an integral one-piece manifold body.

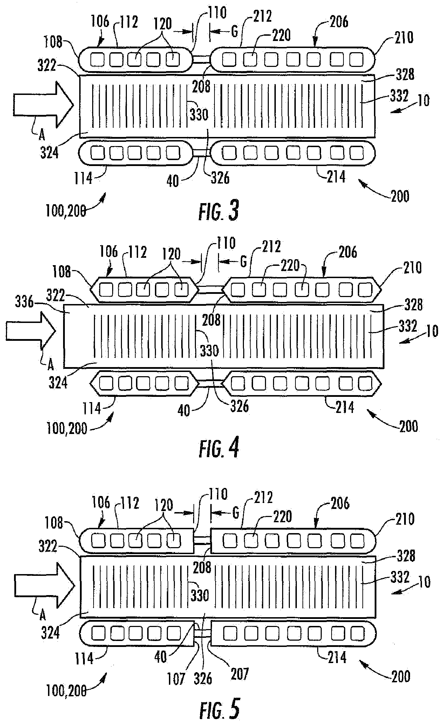

Referring now to FIGs, 3-6, each of the heat exchange tube segments 106, 206 comprises a flattened heat exchange tube having a leading edge 108, 208, a trailing edge 110, 210, an upper flat surface 112, 212, and a lower flat surface 114, 214. The leading edge 108, 208 of each heat exchange tube segment 106, 206 is upstream of its respective trailing edge 110, 210 with respect to air flow through the heat exchanger 10. In the embodiment depicted in FIG. 3, the respective leading and trailing portions of the flattened tube segments 106, 206 are rounded thereby providing blunt leading edges 108, 208 and trailing edges 110, 210. In the embodiment depicted in FIG. 4, the respective leading and trailing portions of the flattened tube segments 106, 206 are tapered to provide a knife -like edge leading edges 108, 208 and trailing edges 110, 210, enhancing heat transfer characteristics. In the embodiment depicted in FIG. 5, the trailing portions of the flattened tube segments 106 terminate in a flat face and the leading portions of the flattened tube segments 208 also terminate in a flat face. This is done to improve tube manufacturability as well as web slotting/trimming and tube cut-to-length operations.

The interior flow passage of each of the heat exchange tube segments 106, 206 of the first and second tube banks 100, 200, respectively, may be divided by interior walls into a plurality of discrete flow channels 120, 220 that extend longitudinally the length of the tube from an inlet end of the tube to the outlet end of the tube and establish fluid communication between the respective headers of the first and the second tube banks 100, 200. In the embodiment of the multi-channel heat exchange tube segments 106, 206 depicted in FIGs. 3-6, the heat exchange tube segments 206 of the second tube bank 200 have a greater width than the heat exchange tube segments 106 of the first tube bank 100. Also, the interior flow passages of the wider heat exchange tube segments 206 may be divided into a greater number of discrete flow channels 220 than the number of discrete flow channels 120 into which the interior flow passages of the heat exchange tube segments 106 are divided. The flow channels 120, 220 may have a circular cross-section, a rectangular cross-section or other non-circular cross-section.

The second tube bank 200, i.e. the rear heat exchanger slab, is disposed behind the first tube bank 100, i.e. the front heat exchanger slab, with respect to the airflow direction, with each heat exchange tube segment 106 directly aligned with a respective heat exchange tube segment 206 and with the leading edges 208 of the heat exchange tube segments 206 of the second tube bank 200 spaced from the trailing edges 110 of the heat exchange tube segments of the first tube bank 100 by a desired spacing, G. An elongated web 40 spans the desired spacing, G, along at least of portion of the length of each aligned set of heat exchange tube segments 106, 206. For each aligned set of heat exchange tube segments 106, 206, at least one web 40 connects the trailing edge 110 of the heat exchange tube segment 106 and the leading edge 208 of the heat exchange tube segment 206 to form a multiple tube, flattened tube assembly 300.

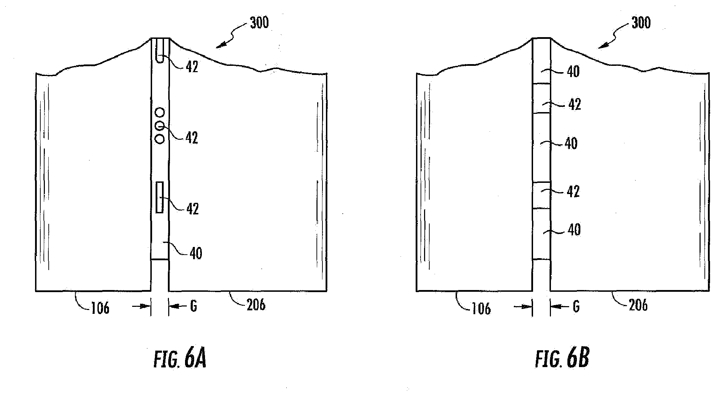

The web 40 has a lateral extent extending between the trailing edge 110 of the heat exchange tube 106 and the leading edge 208 of the heat exchange tube 206. The web 40 may be a single member extending longitudinally substantially the length of the first and second tube segments 106, 206 between the first and second manifolds. Alternatively, the web 40 may comprise a plurality of web segments disposed at longitudinally spaced intervals separated by open gaps. In the embodiment depicted in FIG. 6A, the multiple tube, flattened tube assembly 300 is formed as an integral, single one-piece unitary multiple tube, flattened tube assembly 300 with a single full-length web, for example, by an extrusion process. In the embodiment depicted in FIG. 6B, the web 40 comprises a plurality of web segments 40 attached, for example by brazing or welding, at spaced longitudinal intervals to both the trailing edge 110 of the heat exchange tube segment 106 and the leading edge 208 of the heat exchange tube segment 206 to form the multiple tube, flattened tube assembly 300. In an embodiment, the web 40 may comprise a single, longitudinally extending web member attached, for example by brazing or welding, to both the trailing edge 110 of the heat exchange tube segment 106 and the leading edge 208 of the heat exchange tube segment 206, but not extending substantially the full length of the heat exchange tube segments.

In the embodiment of the multiple tube, flattened tube assembly 300 depicted in FIG. 5, the trailing portion of the forward heat exchange tube segment 106 has a longitudinally extending flat end face 107 and the leading portion of the aft heat exchange tube segment 206 has a longitudinally extending flat end face 207 (I do not see 107 or 207 on the drawings). Thus, the spacing G is bordered by opposed, longitudinally extending, flat surfaces. Such an arrangement facilitates web slotting, web trimming and tube cut-to-length manufacturing operations. In the depicted embodiment of FIGs. 5, the web 40 spanning the spacing G between the flat end faces 107 and 207 is disposed generally centrally between the upper and lower surfaces of the heat exchange tubes 106, 206. However, the web 40 could be disposed with an upper surface thereof flush with the respective upper surfaces of the heat exchange tube segments 106, 206, or disposed with lower surface thereof flush with the respective lower surfaces of the heat exchange tube segments 106, 206. This arrangement can also be extended to the embodiments depicted in FIGs. 3 and 4. Such web positioning may facilitate web slotting, web trimming and tube cut-to-length manufacturing operations. However positioning the web in the middle between the flat end faces 107 and 207 makes tube orientation in the multiple tube, flattened tube assembly 300 independent with respect to the flat end faces 107 and 207.

The web 40 has a plurality of drain openings 42 passing therethrough by way of which moisture retained on the heat exchange surface, including on the upper surface of the heat exchange tube segments 106, 206, may drain. The plurality of drain openings 42 may comprise, for example, elongated slots or holes of any desired shape, such as depicted in FIG. 6A. In an embodiment, the web 40 may be a perforated plate. In the afore-mentioned embodiment depicted in FIG. 6B, wherein the web 40 comprises a plurality of web segments disposed at spaced intervals along the length of the heat exchange tube segments 106, 206, the open areas between successive web segments form the drain openings providing for moisture drainage. In the extruded integral, single piece embodiment of the multiple tube, flattened tube assembly 24, the drain openings 42 may be formed in the web 40 following the extrusion process, for example, but not limited to, by machining or stamping. In the fabricated embodiment of the multiple tube, flattened tube assembly 300 having a full length web 40 brazed or welded to the heat exchange tube segments 106, 206, the drain openings 42 may be formed in the web 40 prior to brazing or welding the web 40 to the heat exchange tube segments 106, 206.

In an embodiment, the drain openings 42 may have a width spanning from one-fifth to the entire width of the web 40. In an embodiment, the drain openings 42 may be slots having a length to width ratio in the range from 1 to 80. In an embodiment, the drain openings may be slots having a slot length to web width ratio in the range from 0.5 to 10. In an embodiment, the web 40 may be a plate-like member having a thickness to width ratio in the range from 0.02 to 0.5. According to the invention the drain openings 42 are not positioned in the middle of the of the web 40 but off-centered to be in proximity of the trailing edge of tube segment 106 or in the proximity of the leading edge of the tube segment 206, depending on the heat exchanger orientation and inclination to provide superior drainage characteristics.

The flattened tube finned heat exchanger 10 disclosed herein further includes a plurality of folded fins 320. Each folded fin 320 is formed of a single continuous strip of fin material tightly folded in a ribbon-like fashion thereby providing a plurality of closely spaced fins 322 that extend generally orthogonal to the flattened heat exchange tubes 106, 206. Typically, the fin density of the closely spaced fins 322 of each continuous folded fin 320 may be about 18 to 25 fins per inch, but higher or lower fin densities may also be used. Heat exchange between the refrigerant flow, R, and air flow, A, occurs through the outer surfaces 112, 114 and 212, 214, respectively, of the heat exchange tube segments 106, 206, collectively forming the primary heat exchange surface, and also through the heat exchange surface of the fins 322 of the folded fin 320, which forms the secondary heat exchange surface.

The depth of each of the ribbon-like folded fin 320 extends at least from the leading edge 108 of the first tube bank 100 to the trailing edge of 210 of the second bank 200, and may overhang the leading edge 108 of the first tube bank 100 or/and trailing edge 208 of the second tube bank 200 as desired. Thus, when a folded fin 320 is installed between a set of adjacent multiple tube, flattened heat exchange tube assemblies 240 in the array of tube assemblies of the assembled heat exchanger 10, a first section 324 of each fin 322 is disposed within the first tube bank 100, a second section 326 of each fin 322 spans the spacing, G, between the trailing edge 110 of the first tube bank 100 and the leading edge 208 of the second tube bank 200, and a third section 328 of each fin 322 is disposed within the second tube bank 200. In an embodiment, each fin 322 of the folded fin 320 may be provided with louvers 30, 32 formed in the first and third sections, respectively, of each fin 322.

The multiple bank, flattened tube heat exchange unit 10 disclosed herein is depicted in a cross-counterflow arrangement wherein refrigerant (labeled "R") from a refrigerant circuit (not shown) of a refrigerant vapor compression system (not shown) passes through the manifolds and heat exchange tube segments of the tube banks 100, 200, in a manner to be described in further detail hereinafter, in heat exchange relationship with a cooling media, most commonly ambient air, flowing through the airside of the heat exchanger 10 in the direction indicated by the arrow labeled "A" that passes over the outside surfaces of the heat exchange tube segments 106, 206 and the surfaces of the folded fin strips 320. The air flow first passes transversely across the upper and lower horizontal surfaces 112, 114 of the heat exchange tube segments 106 of the first tube bank, and then passes transversely across the upper and lower horizontal surfaces 212, 214 of the heat exchange tube segments 206 of the second tube bank 200. The refrigerant passes in cross-counterflow arrangement to the airflow, in that the refrigerant flow passes first through the second tube bank 200 and then through the first tube bank 100. The multiple tube bank, flattened tube finned heat exchanger 10 having a cross-counterflow circuit arrangement yields superior heat exchange performance, as compared to the crossflow or cross-parallel flow circuit arrangements, as well as allows for flexibility to manage the refrigerant side pressure drop via implementation of tubes of various widths within the first tube bank 100 and the second tube bank 200.

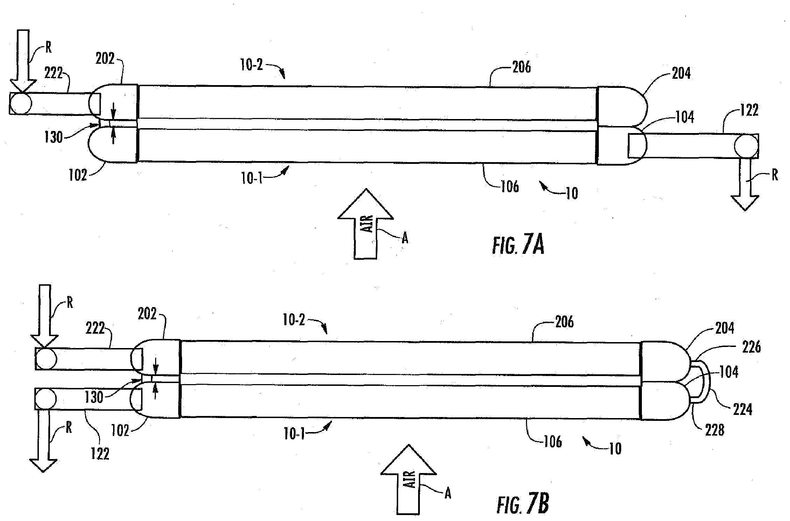

In the embodiment depicted in FIGs. 1 and 7A, the second tube bank 200, i.e. the aft heat exchanger slab with respect to air flow, has a single-pass refrigerant circuit configuration and the first tube bank 100, i.e. the forward heat exchanger slab with respect to air flow, has a two pass configuration. Refrigerant flow passes from a refrigerant circuit (not shown) into the first manifold 202 of the second tube bank 200 through at least one refrigerant inlet 222 (FIG. 7A), passes through the heat exchange tube segments 206 into the second manifold 204 of the second tube bank 200, then passes into the second manifold 104 of the first tube bank 100, thence through a lower set of the heat exchange segments 106 into the first manifold 102 of the first tube bank 100, thence back to the second manifold 104 through an upper set of the heat exchange tubes 106, and thence passes back to the refrigerant circuit through at least one refrigerant outlet 122.

In the embodiment depicted in FIG. 7B, the second tube bank 200, i.e. the aft heat exchanger slab with respect to air flow, has a single-pass refrigerant circuit configuration and the first tube bank 100, i.e. the forward heat exchanger slab with respect to air flow, also has a single pass configuration. Refrigerant flow passes from a refrigerant circuit (not shown) into the first manifold 202 of the second tube bank 200 through at least one refrigerant inlet 222, passes through the heat exchange tube segments 206 into the second manifold 204 of the second tube bank 200, then passes into the second manifold 104 of the first tube bank 100, thence passes through the heat exchange segments 106 into the first manifold 102 of the first tube bank 100, and thence passes back to the refrigerant circuit through at least one refrigerant outlet 122.

The neighboring second manifolds 104 and 204 are connected in fluid flow communication such that refrigerant may flow from the second manifold 204 of the second tube bank 200 into the second manifold 104 of the first tube bank 100. In the embodiment depicted in FIG. 7A, the second manifold 104 and the second manifold 204 are disposed with a respective wall portions of the manifolds 104, 204 interfacing in side-by-side abutting relationship with flow passages through the wall of the second manifold 204 being in registration with similar flow passages through the interfacing wall of the second manifold 104 thereby establishing internal fluid flow communication through which refrigerant may pass from the second manifold 204 into the second manifold 104.

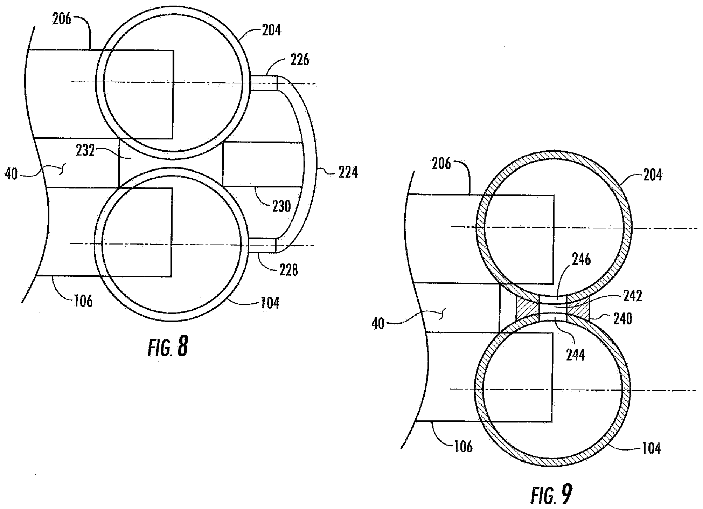

In the embodiment depicted in FIG. 7B, the neighboring second manifolds 104 and 204 are separate manifolds connected in fluid flow communication through at least one external conduit 224 opening at a first end 226 into an interior chamber of the second manifold 204 of the second tube bank 200 and opening at a second end 228 into an interior chamber of the second manifold 204 of the firs tube bank 100. In fabrication of the heat exchange unit 10, after assembly of the second manifolds 104 and 204 to the first and second tube banks 100, 200, respectively, the first end 226 of the conduit 224 is inserted into a mating hole extending through the wall of the second manifold 204 of the second tube bank 200 and the second end 228 of the conduit 24 is inserted into a mating hole extending through the wall of the second manifold 104 of the second tube bank 100. To guard against an excessive depth of insertion of the first and second ends 226, 228 of the conduit 224 into the manifolds 104, 204, respectively, a block or rod 230 may be temporarily positioned, as depicted in FIG. 8, between the conduit 224 and the external surface of the manifolds 104, 204 to restrict the depth of insertion of the first and second ends 226, 228 of the conduit 230 into the respective mating holes of the first manifold 104 and the second manifold 204. After the first and second ends 226, 228 of the conduit 224 are metallurgiclally bonded, for example by brazing or welding, to the second manifolds 104 and 204, respectively, the block 230 may be removed. More than one conduit 224 may be provided to establish fluid flow communication between the second manifold 104 and the second manifold 204. For example, a plurality of external conduits 224 may be provided at spaced longitudinal intervals.

To guard against an excessive depth of insertion of the ends of the heat exchange tube segments 106, 206 into the respective second manifolds 104 and 204, the end portion of the web 40 between the ends of the heat exchange tube segments 106, 206 may be machined away to a desired longitudinal depth to create a notch 232 between the ends of the heat exchange tube segments 106, 206, as illustrated in FIG. 8. During the assembly of the heat exchanger slabs 100, 200, when the second manifolds 104, 204 are inserted onto the ends of the heat exchange tube segments 106, 206, the manifolds 104, 204 will slip onto the ends of the heat exchange tube segments 106, 206 until contacting the web 40 at the base of the notch 232, as illustrated in FIG 8. The opposite longitudinal end of the web 40 may be similarly machined away to a desired longitudinal depth to create a similar notch for limiting the depth of insertion of the opposite longitudinal ends of the heat exchange tube segments 106, 206 into the first manifolds 102, 202, respectively, at the other end of the heat exchanger slabs 100, 200.

An alternate method for connecting the second manifolds 104 and 204 in fluid flow communication, a block inert 240 having a central bore 242 extending therethrough is positioned between the manifolds 104 and 204 as illustrated in FIG. 9. The block insert 240 is positioned such that the central bore 242 aligns with holes 244 and 246 formed through the respective walls of the manifolds 104 and 204, respectively. So aligned a continuous flow passage is established through which refrigerant may pass from the interior of the second manifold 204 of the second tube bank 200 through the hole 246, thence through the central bore 242 of the block insert 240, and thence through the hole 244 into the interior of the second manifold 104 of the first tube bank 100. The side faces 248 of the block insert 240 are contoured to match and mate with the contour of the external surface of the respective abutting second manifold and the block insert 240 is metallurgically bonded, for example by brazing or welding, to each of the second manifolds 104 and 204.

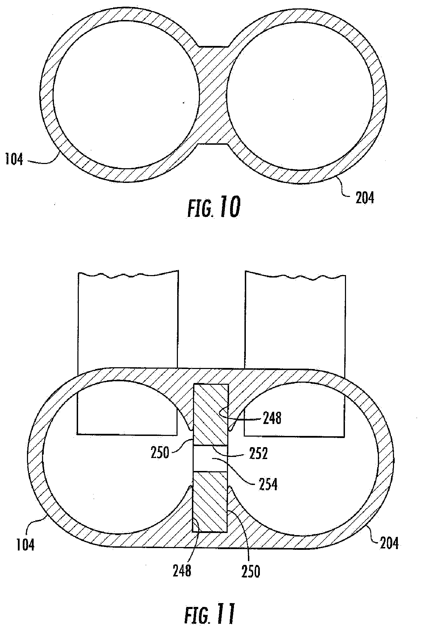

Rather than being disposed in side-by-side relationship as depicted in FIG. 7A and 7B or in spaced relationship as depicted in FIGs. 8 and 9, the second manifolds 104 and 204 may be formed as an integral manifold, such as, for example, depicted in FIGs. 10 and 11. In the embodiment of an integral manifold depicted in FIG. 10, the two manifolds 104 and 204 are extruded as a single piece extrusion forming two longitudinally extending chambers with an integral wall separating the respective chambers, one chamber forming the manifold 104 and the other chamber forming the manifold 102. In this embodiment, the chambers of the two manifolds would be connected in fluid flow communication through at least one external conduit, such as illustrated in FIG. 8. In the embodiment of an integral manifold depicted in FIG. 11, the two manifolds are also extruded as a single extrusion forming two longitudinally extending chambers with an open, longitudinally extending slot 248 extending between the chambers. After the integral manifold extrusion is cut to length, a longitudinally extending separator plate 250 is inserted into the slot 248 to separate the two chambers, one chamber forming the first manifold 104 and the other chamber forming the second manifold 204. To establish fluid flow communication between the two manifolds 104, 204, at least one hole 252 at a selected location, and typically a plurality of holes at longitudinally spaced locations, may be formed through the separator plate to provide one or more fluid flow passages 254 establishing fluid flow communication between the respective chambers of the second manifolds 104, 204. The holes 252 have a round, elliptical. Racetrack, rectangular, triangular or any other cross-section suitable for a particular manufacturing process and heat exchanger design configuration. Although described herein in application to the second manifolds 104, 204, it is to be understood that in some embodiments of the multiple bank heat exchanger 10, the first manifolds 102 and 202 may also be formed as an integral manifold having a chamber defining the first manifold 102 and a chamber forming the first manifold 202.

The multiple tube bank flattened tube heat exchanger 10 has been described hereinbefore with reference to a two tube bank embodiment wherein the heat exchange tube assembly consists of a leading heat exchange tube segment 106 and a trailing heat exchange tube segment 206 with the trailing edge 110 of the leading tube segment 106 connected by web 40 to the leading edge 208 of the trailing heat exchange tube segment 206. However, it is to be understood that the multiple tube bank flattened tube heat exchanger 10 may include more than two tube banks and employ heat exchange tube assemblies formed of three or more heat exchange tube segments connected in sequence leading edge to trailing edge by web members.

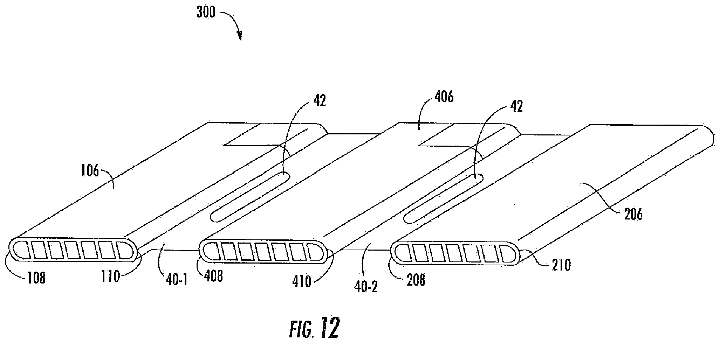

For example, there is depicted in FIG. 12 a heat exchange tube assembly 300 comprising a leading tube segment 106, a trailing tube segment 206, and at least one intermediate tube segment 406. In the depicted embodiment wherein the heat exchange tube assembly comprises three tube segments, the intermediate tube segment 406 is disposed in alignment with and between the leading tube segment 106 and the trailing tube segment 206. The leading edge 408 of the intermediate tube segment 406 is connected by a longitudinally extending web member 40-1 to the trailing edge 110 of the leading tube segment, and the trailing edge 410 of the intermediate tube segment 406 is connected by a longitudinally extending web member 40-2 to the leading edge 208 of the trailing tube segment 206. The web members 40-1, 40-2 may be provided with drain openings 42 as hereinbefore discussed with respect to web 40 and depicted in FIGs. 6A and 6B. For heat exchange tube assemblies 300 comprising more than three aligned heat exchange tube segments, each intermediate tube segment would have its leading edge connected to the next upstream heat exchange tube segment by a web member and have its trailing edge connected to the next downstream heat exchange tube segment by a web member,

In an embodiment of the multiple bank flattened tube finned heat exchanger 10 as disclosed herein, the manifolds, heat exchange tubes and fins are all made of aluminum or aluminum alloy material. For an all aluminum heat exchanger design, the entire multiple bank flattened tube finned heat exchanger is assembled and the placed in a brazing furnace wherein the components of the assembled heat exchanger are bonded by brazing. In a further aspect of this application, a method is provided for fabricating a flattened tube finned heat exchange unit having a first tube bank and a second tube bank as disclosed hereafter.

A plurality of multiple tube, flattened tube assemblies 240 are formed with each assembly 240 including a longitudinally extending forward heat exchange tube segment 106 and a longitudinally extending aft heat exchange tube segment 206 connected by a web member 40 extending between a trailing edge 110 of the forward heat exchange tube segment 106 and a leading edge of the aft heat exchange tube segment 208, such as for example illustrated in FIG. 6. The plurality of multiple tube, flattened tube assemblies are arranged in a parallel array in spaced relationship with a continuous folded fin strip 320 disposed between each pair of parallel multiple tube, flattened tube assemblies 240 to form a partially assembled folded fin and tube pack. The assembled folded fin and tube pack may be next compressed between end braze bars and held together by dedicated fixture clips.

The four manifolds 102, 104, 202 and 204 are now mounted on the tube segments 106, 206. The first manifold 202 is mounted to a respective first end of each of the aft heat exchange tube segments 206 of the plurality of multiple tube, flattened tube assemblies 240. The second manifold 204 is mounted to a respective second end of each of the aft heat exchange tube segments 206 of the plurality of multiple tube, flattened tube assemblies 240. The first manifold 102 is mounted to a respective first end of each of the forward heat exchange tube segments 106 of the plurality of multiple tube, flattened tube assemblies 240. The second manifold 104 of the first heat exchanger slab 100 is mounted to a respective second end of each of the forward heat exchange tube segments 106 of the plurality of multiple tube, flattened tube assemblies 240, thereby forming a final assembly. The order in which the manifolds are mounted to the ends of the respective heat exchange tube segments is a matter of choice. Of course, the paired manifolds 102, 202 and 104, 204 may be formed as separate chambers within an integral single piece manifold body, such as depicted in FIGs. 10 and 11, or preassembled together in side-by-side relationship prior to being mounted to the heat exchange tube segments 106, 206.

The final assembly is placed in a brazing furnace and the heat exchange tube segments, the corrugated fin strips, and the manifolds metallurgically bonded in place. Each of the folded fin strips 20 is bonded by brazing to the respective tube segments 106, 206 against which it abuts. Simultaneously, the manifolds 102, 104 are bonded by brazing to the tube segments 106 and the manifolds 202, 204 are also bonded by brazing to the tube segments 206. It should be understood that the final assembly may consist of ninety or more multiple tubes, flattened tube assemblies, and that each multiple tube, flattened tube assembly consists of at least two longitudinally extending tubes joined by a web member, the tubes being as long as 7-8 feet or more.

After the brazing process is complete, the brazed assembly is removed from the furnace. At point, any necessary external conduits for establishing refrigerant flow communication between the manifolds 104, 204 may be mounted thereto as herein before described and hand brazed in place. In an embodiment, however, the mounting of any necessary external conduits may be made on the final assembly of the heat exchanger prior to placing the final assembly into the brazing furnace. The external conduits would then be bonded to the manifolds in place in the brazing furnace.

A pair of multiple slab, fin and flattened tube heat exchangers 10 are shown in FIG. 1 forming a generally V-shaped heat exchanger system 20 including an air-moving device, such as for example fan 22, for passing air through the airside passages of the each of the heat exchanger units 10 in heat exchange with a heat exchange fluid, such as for example refrigerant, flowing through the heat exchange tube segments of the heat exchanger units 10. However, the multiple slab, fin and flattened tube heat exchangers, may be used in many other configurations of heat exchanger systems, whether or not the multiple slab heat exchanger includes a web member 40 spanning the space G between and connecting the respective trailing edges 110 of the forward heat exchange tube segments 106 to the leading edges 208 of the aft heat exchange tube segments 206.

While the present invention has been particularly shown and described with reference to the exemplary embodiments as illustrated in the drawing, it will be recognized by those skilled in the art that various modifications may be made without departing from the scope of the invention as defined in the attached claims. For example, it is to be understood that the multiple bank flatted tube finned heat exchanger 10 disclosed herein may include more than two tube banks. It is also to be understood that the tube banks 100, 200 could include serpentine tubes with the heat exchange tube segments 106, 206 being parallel linear tube segments connected by U-bends or hairpin turns to form a serpentine tube connected at its respective ends between the first manifold and the second manifold of the tube bank. Therefore, it is intended that the present disclosure not be limited to the particular embodiment(s) disclosed as, but that the disclosure will include all embodiments falling within the scope of the appended claims.

## Claims

1. A heat exchange tube assembly (300) comprising:
a first flattened heat exchange tube segment (106) extending longitudinally;
a second flattened heat exchange tube segment (206) extending longitudinally in spaced aligned relationship with said first flattened heat exchange tube segment (106); and
a web member (40) extending between and connecting a trailing edge (110) of said first heat exchange tube segment (106) and a leading edge (208) of said second heat exchange tube segment (206);
wherein said web member (40) has at least one drainage opening (42) extending therethrough
**characterized in that** said at least one drainage opening (42) is positioned off-centered to be in the proximity of the trailing edge (110) of said first heat exchange tube segment (106) or in the proximity of the leading edge (208) of said second heat exchange tube segment (206).

2. The heat exchange tube assembly (300) as recited in claim 1 wherein said first flattened heat exchange tube segment (106), said second heat exchange tube segment (206), and said web member (40) are formed by an extrusion process as an integral single piece tube assembly.

3. The heat exchange tube assembly (300) as recited in claim 1 wherein said web member (40) has a plurality of drainage openings (42) extending therethrough and disposed at spaced longitudinal intervals.

4. The heat exchange tube assembly (300) as recited in claim 1 wherein said at least one drainage opening (42) comprises a slot or a hole,
wherein said at least one drainage opening (42) in particular comprises a slot having a length and a width and a length to width ratio in the range from 1 to 80,
or a longitudinally elongated slot having a length and a ratio of the slot length to a width of said web member (40) in the range from 0.5 to 10.

5. The heat exchange tube assembly (300) as recited in claim 1 wherein said web member (40) has a width and a thickness and a thickness to width ratio in the range from 0.02 to 0.5.

6. The heat exchange tube assembly (300) as recited in claim 1 wherein said web member (40) is metallurgically bonded to said first heat exchange tube segment (106) and to said second heat exchange tube segment (206) and has at least one drainage opening (42) extending therethrough.

7. The heat exchange tube assembly (300) as recited in claim 1 wherein said web member (40) comprises a plurality of shortened web segments (40) disposed at longitudinally spaced intervals along the longitudinal length of and metallurgically bonded to said first heat exchange tube segment (106) and to said second heat exchange tube segment (206), said plurality of web segments (40) spaced apart to form a plurality of drainage openings (42) between said first heat exchange tube segment (106) and said second heat exchange tube segment (206).

8. The heat exchange tube assembly (300) as recited in claim 1 further comprising a third flattened heat exchange tube segment extending longitudinally in spaced aligned relationship between and with said first heat exchange tube segment (106) and said second heat exchange tube segment (206), said web member (40) including a first section and a second section, the first section extending between and connecting the trailing edge (110) of said first heat exchange tube segment (106) to a leading edge of said third heat exchange tube segment and the second section extending between and connecting a trailing edge of said third heat exchange tube segment to the leading edge (208) of said second heat exchange tube segment (206).

9. A heat exchange tube assembly (300) comprising:
a forward flattened heat exchange tube segment (106) extending longitudinally;
a flattened heat exchange tube segment (206) extending longitudinally aligned with and spaced aftward of said forward heat exchange tube segment (106);
a plurality flattened heat exchange tube segments (406) arrayed in spaced aligned relationship between said forward heat exchange tube segment (106) and said aft heat exchange tube segment (206);
a first web member (40-1) extending between and connecting a trailing edge (110) of said forward heat exchange tube segment (106) to a leading edge (408) of a first of said plurality of intermediate heat exchange tube segments (406);
a second web member (40-2) extending between and connecting a trailing edge (410) of a last of said plurality of intermediate heat exchange tube segments (406) and a leading edge (208) of said aft heat exchange tube segment (206); and
a plurality of intermediate web members disposed alternately between said plurality of intermediate heat exchange tube segments (406), each intermediate web member of said plurality of intermediate web members extending between and connecting a trailing edge (410) of a respective one of said plurality of intermediate heat exchange tube segments (406) to a leading edge (408) of another respective one of said plurality of heat exchange tube segments (406);
wherein at least one of said web member (40-1, 40-2) has at least one drainage opening (42) extending therethrough
**characterized in that** said at least one drainage opening (42) is positioned off-centered to be in the proximity of the trailing edge (110) of an adjacent heat exchange tube segment (106, 406) or in the proximity of the leading edge (208) of an adjacent heat exchange tube segment (206, 406)..

10. A multiple slab heat exchanger comprising:
a plurality of multiple tube flattened heat exchange tube assemblies according to one of the preceding claims disposed in spaced parallel relationship.

11. The multiple slab heat exchanger as recited in claim 10 further comprising:
a first manifold (102) mounted in fluid flow communication to a respective first end of each of the first flattened heat exchange tube segments (106) of the plurality of heat exchange tube assemblies and a second manifold (104) in fluid flow communication to a respective second end of each of the first flattened heat exchange tube segments (106) of the plurality of heat exchange tube assemblies, thereby forming a first heat exchanger slab (100); and
a first manifold mounted (202) in fluid flow communication to a respective first end of each of the second flattened heat exchange tube segments (206) of the plurality of heat exchange tube assemblies and a second manifold (204) in fluid flow communication to a respective second end of each of the second flattened heat exchange tube segments (206) of the plurality of heat exchange tube assemblies, thereby forming a second heat exchanger slab (200).

12. The multiple slab heat exchanger as recited in claim 11 further comprising:
a folded fin (32) disposed between each set of neighboring heat exchange assemblies of said plurality of parallel spaced heat exchange tube assemblies, each folded fin (320) extending between the first and second flattened tube segments (106, 206) of both of said first heat exchanger slab (100) and said second heat exchanger slab (200) and spanning said web members (40, 40-1, 40-2).

13. A method for fabricating a flattened tube finned heat exchanger as defined in the previous claims having at least a first tube bank and a second tube bank, the method comprising the steps of:
arraying a plurality of multiple tube flattened heat exchange tube assemblies (240) in parallel spaced relationship, each heat exchange tube assembly (240) including a first flattened heat exchange tube segment (106) extending longitudinally, a second flattened heat exchange tube segment (206) extending longitudinally in spaced aligned relationship with said first flattened heat exchange tube segment (106), and a web member (40, 40-1, 40-2) extending between and connecting a trailing edge (110) of said first heat exchange tube segment (106) and a leading edge (208) of said second heat exchange tube segment (206), said web member (40, 40-1, 40-2) comprising at least one drainage opening (42) extending therethrough and being positioned off-centered to be in the proximity of the trailing edge (110) of said first heat exchange tube segment (106) or in the proximity of the leading edge (208) of said second heat exchange tube segment (206);
disposing a folded fin (320) between each pair of parallel flattened heat exchange tube assemblies (240) to form a partially assembled fin and tube pack;
compressing the assembled fin and tube pack between end braze bars;
mounting a first manifold (102) to a respective first end of each of the first flattened heat exchange segments (106) of the plurality flattened heat exchange tube assemblies (204), mounting a second manifold (104) to a respective second end of each of the first flattened heat exchange segments (106) of the plurality of flattened heat exchange tube assemblies (204), mounting a first manifold (202) to a respective first end of each of the second flattened heat exchange tube segment (206) of the plurality of flattened heat exchange tube assemblies (2049, and mounting a second manifold (204) to a respective second end of each of the second heat exchange tube segments (206) of the plurality of flattened heat exchange tube assemblies (204), thereby forming a final assembly; and
bonding the final assembly by brazing in a brazing furnace.

14. The method for fabricating a flattened tube finned heat exchanger as recited in claim 13 further comprising providing a notch (232) in each longitudinal end of said web (40), the notch (232) having a longitudinal depth preselected to limit a depth of insertion of the ends of the first and second heat exchange tube segments (106, 206) into the respective manifolds (102, 104, 202, 204).

15. The method for fabricating a flattened tube finned heat exchanger as recited in claim 14 further comprising connecting the second manifold (204) mounted to the second ends of the second heat exchange tube segments (206) of said plurality of flattened heat exchange tube assemblies in fluid communication with the second manifold (104) mounted to the second ends of the first heat exchange tube segments (106) of said plurality of flattened heat exchange tube assemblies through an external conduit (224),
wherein the external conduit (224) in particular is generally U-shaped and the method in particular further comprises temporarily positioning a block (230) between the external conduit (224) and said second manifolds (104, 204), the block (230) having a dimension preselected to limit the depth of insertion of a first end and a second end of the external conduit (224) into the respective second manifolds (104, 204).

## Patentansprüche

1. Wärmetauschrohranordnung, (300), die Folgendes umfasst:
ein erstes abgeflachtes Wärmetauschrohrsegment (106), das sich in Längsrichtung erstreckt;
ein zweites abgeflachtes Wärmetauschrohrsegment (206), das sich in Längsrichtung in beabstandeter ausgerichteter Beziehung mit dem ersten abgeflachten Wärmetauschrohrsegment (106) erstreckt; und
ein Stegelement (40), das sich zwischen einer Hinterkante (110) des ersten Wärmetauschrohrsegments (106) und einer Vorderkante (208) des zweiten Wärmetauschrohrsegments (206) erstreckt und sie miteinander verbindet;
wobei das Stegelement (40) mindestens eine sich dadurch erstreckende Ablauföffnung (42) aufweist,
**dadurch gekennzeichnet, dass** die mindestens eine Ablauföffnung (42) außermittig positioniert ist, damit sie sich in der Nähe der Hinterkante (110) des ersten Wärmetauschrohrsegments (106) oder in der Nähe der Vorderkante (208) des zweiten Wärmetauschrohrsegments (206) befindet.

2. Wärmetauschrohranordnung (300) nach Anspruch 1, wobei das erste abgeflachte Wärmetauschrohrsegment (106), das zweite Wärmetauschrohrsegment (206) und das Stegelement (40) in einem Extrusionsverfahren als eine integrale einstückige Rohranordnung geformt werden.

3. Wärmetauschrohranordnung (300) nach Anspruch 1, wobei das Stegelement (40) eine Vielzahl von sich dadurch erstreckenden Ablauföffnungen (42) aufweist, die in beabstandeten Längsintervallen angeordnet sind.

4. Wärmetauschrohranordnung (300) nach Anspruch 1, wobei die mindestens eine Ablauföffnung (42) einen Schlitz oder ein Loch umfasst,
wobei die mindestens eine Ablauföffnung (42) insbesondere einen Schlitz umfasst, die eine Länge und eine Breite und ein Längen-zu-Breiten-Verhältnis im Bereich von 1 bis 80 aufweist
oder einen in Längsrichtung verlängerte Schlitz, der eine Länge und ein Verhältnis der Schlitzlänge zu einer Breite des Stegelements (40) im Bereich von 0,5 bis 10 aufweist.

5. Wärmetauschrohranordnung (300) nach Anspruch 1, wobei das Stegelement (40) eine Breite und eine Dicke und ein Dicke-zu-Breite-Verhältnis im Bereich von 0,02 bis 0,5 aufweist.

6. Wärmetauschrohranordnung (300) nach Anspruch 1, wobei das Stegelement (40) metallurgisch mit dem ersten Wärmetauschrohrsegment (106) und dem zweiten Wärmetauschrohrsegment (206) verbunden ist und mindestens eine sich dadurch erstreckende Ablauföffnung (42) aufweist.

7. Wärmetauschrohranordnung (300) nach Anspruch 1, wobei das Stegelement (40) eine Vielzahl von verkürzten Stegelementen (40) umfasst, die in in Längsrichtung beabstandeten Intervallen entlang der longitudinalen Länge des ersten Wärmetauschrohrsegments (106) und des zweiten Wärmetauschrohrsegments (206) angeordnet und metallurgisch mit ihnen verbunden sind, wobei die Vielzahl von Stegelementen (40) in Abständen angeordnet sind, um eine Vielzahl von Ablauföffnungen (42) zwischen dem ersten Wärmetauschrohrsegment (106) und dem zweiten Wärmetauschrohrsegment (206) zu bilden.

8. Wärmetauschrohranordnung (300) nach Anspruch 1, die weiterhin ein drittes abgeflachtes Wärmetauschrohrsegment umfasst, das sich in Längsrichtung in beabstandeter ausgerichteter Beziehung zwischen und mit dem ersten Wärmetauschrohrsegment (106) und dem zweiten Wärmetauschrohrsegment (206) erstreckt, wobei das Stegelement (40) einen ersten Abschnitt und einen zweiten Abschnitt einschließt, wobei sich der erste Abschnitt zwischen der Hinterkante (110) des ersten Wärmetauschrohrsegments (106) und einer Vorderkante des dritten Wärmetauschrohrsegments erstreckt und sie miteinander verbindet und der zweite Abschnitt sich zwischen einer Hinterkante des dritten Wärmetauschrohrsegments und der Vorderkante (208) des zweiten Wärmetauschrohrsegments (206) erstreckt und sie miteinander verbindet.

9. Wärmetauschrohranordnung (300), die Folgendes umfasst:
ein vorderes abgeflachtes Wärmetauschrohrsegment (106), das sich in Längsrichtung erstreckt;
ein abgeflachtes Wärmetauschrohrsegment (206), das sich in Längsrichtung erstreckt und ausgerichtet mit und beabstandet hinter dem ersten vorderen Wärmetauschrohrsegment (106) angeordnet ist;
eine Vielzahl von abgeflachten Wärmetauschrohrsegmenten (406), die in beanstandeter ausgerichteter Beziehung mit dem vorderen Wärmetauschrohrsegment (106) und dem hinteren Wärmetauschrohrsegment (206) angeordnet sind;
ein erstes Stegelement (40-1), das sich zwischen einer Hinterkante (110) des vorderen Wärmetauschrohrsegments (106) und einer Vorderkante (408) eines ersten der Vielzahl von zwischenliegenden Wärmetauschrohrsegmenten (406) erstreckt und sie miteinander verbindet;
ein zweites Stegelement (40-2), das sich zwischen einer Hinterkante (410) eines letzten der Vielzahl von zwischenliegenden Wärmetauschrohrsegmenten (406) und einer Vorderkante (208) des hinteren Wärmetauschrohrsegments (206) erstreckt und sie miteinander verbindet; und
eine Vielzahl von zwischenliegenden Stegelementen, die abwechselnd zwischen der Vielzahl von zwischenliegenden Wärmetauschrohrsegmenten (406) angeordnet sind, wobei sich jedes zwischenliegende Stegelement der Vielzahl von zwischenliegenden Stegelementen zwischen einer Hinterkante (410) eines entsprechenden der Vielzahl von zwischenliegenden Wärmetauschrohrsegmenten (406) und einer Vorderkante (408) eines anderen entsprechenden der Vielzahl von Wärmetauschrohrsegmenten (406) erstreckt und sie miteinander verbindet;
wobei mindestens eines der Stegelemente (40-1, 40-2) mindestens eine sich dadurch erstreckende Ablauföffnung (42) aufweist,
**dadurch gekennzeichnet, dass** die mindestens eine Ablauföffnung (42) außermittig positioniert ist, damit sie sich in der Nähe der Hinterkante (110) eines benachbarten Wärmetauschrohrsegments (106, 406) oder in der Nähe der Vorderkante (208) eines benachbarten Wärmetauschrohrsegments (206, 406) befindet.

10. Wärmetauscher mit mehreren Platten, der Folgendes umfasst:
eine Vielzahl von abgeflachten Wärmetauschrohranordnungen mit mehreren Rohren nach einem der vorhergehenden Ansprüche, die in beabstandeter paralleler Beziehung angeordnet sind.

11. Wärmetauscher mit mehreren Platten nach Anspruch 10, der weiterhin Folgendes umfasst:
einen ersten Verteiler (102), der in Fluidflusskommunikation mit einem entsprechenden ersten Ende jedes der ersten abgeflachten Wärmetauschrohrsegmente (106) der Vielzahl von Wärmetauschrohranordnungen montiert ist, und einen zweiten Verteiler (104), der in Fluidflusskommunikation mit einem entsprechenden zweiten Ende jedes des ersten abgeflachten Wärmetauschrohrsegments (106) der Vielzahl von Wärmetauschrohranordnungen montiert ist, um dadurch eine erste Wärmetauscherplatte (100) zu bilden; und
einen ersten Verteiler (202), der in Fluidflusskommunikation mit einem entsprechenden ersten Ende jedes der zweiten abgeflachten Wärmetauschrohrsegmente (206) der Vielzahl von Wärmetauschrohranordnungen montiert ist, und einen zweiten Verteiler (204), der in Fluidflusskommunikation mit einem entsprechenden zweiten Ende jedes der zweiten abgeflachten Wärmetauschrohrsegmente (206) der Vielzahl von Wärmetauschrohranordnungen montiert ist, um dadurch eine zweite Wärmetauscherplatte (200) zu bilden.

12. Wärmetauscher mit mehreren Platten nach Anspruch 11, der weiterhin Folgendes umfasst:
ein gefaltetes Rippenelement (32), das zwischen jedem Paar benachbarter Wärmetauschanordnungen der Vielzahl von parallel beabstandeten Wärmetauschrohranordnungen angeordnet ist, wobei sich jedes gefaltete Rippenelement (320) zwischen den ersten und zweiten abgeflachten Rohrsegmenten (106, 206) sowohl der ersten Wärmetauscherplatte (100) als auch der zweiten Wärmetauscherplatte (200) erstreckt und die Stegelemente (40, 40-1, 40-2) umspannt.

13. Verfahren zum Herstellen eines Rippenwärmetauschers mit abgeflachten Rohren nach einem der vorhergehenden Ansprüche, der mindestens ein erstes Rohrbündel und ein zweites Rohrbündel aufweist, wobei das Verfahren die folgenden Schritte umfasst:
Anordnen einer Vielzahl von abgeflachten Wärmetauschrohranordnungen (240) mit mehreren Rohren in parallel beabstandeter Beziehung, wobei jede Wärmetauschrohranordnung (240) ein erstes abgeflachtes Wärmetauschrohrsegment (106), das sich in Längsrichtung erstreckt, ein zweites abgeflachtes Wärmetauschrohrsegment (206), das sich in Längsrichtung in beabstandeter ausgerichteter Beziehung mit dem ersten abgeflachten Wärmetauschrohrsegment (106) erstreckt, und ein Stegelement (40, 40-1, 40-2) einschließt, das sich zwischen einer Hinterkante (110) des ersten Wärmetauschrohrsegments (106) und einer Vorderkante (208) des zweiten Wärmetauschrohrsegments (206) erstreckt und sie miteinander verbindet, wobei das Stegelement (40, 40-1, 40-2) mindestens eine sich dadurch erstreckende Ablauföffnung (42) umfasst, die außermittig positioniert ist, damit sie sich in der Nähe der Hinterkante (110) des ersten Wärmetauschrohrsegments (106) oder in der Nähe der Vorderkante (208) des zweiten Wärmetauschrohrsegments (206) befindet;
Anordnen eines gefalteten Rippenelements (320) zwischen jedem Paar von parallelen abgeflachten Wärmetauschrohranordnungen (240), um ein teilweise zusammengebautes Rippen- und Rohrbündel zu bilden;
Komprimieren des zusammengebauten Rippen- und Rohrbündels zwischen Endlötstäben;
Montieren eines ersten Verteilers (102) an einem entsprechenden ersten Ende jedes der ersten abgeflachten Wärmetauschsegmente (106) der Vielzahl von abgeflachten Wärmetauschrohranordnungen (204), Montieren eines zweiten Verteilers (104) an einem entsprechenden zweiten Ende jedes der ersten abgeflachten Wärmetauschsegmente (106) der Vielzahl von abgeflachten Wärmetauschrohranordnungen (204), Montieren eines ersten Verteilers (202) an einem entsprechenden ersten Ende jedes der zweiten abgeflachten Wärmetauschrohrsegmente (206) der Vielzahl von abgeflachten Wärmetauschrohranordnungen (204) und Montieren eines zweiten Verteilers (204) an einem entsprechenden zweiten Ende jedes der zweiten Wärmetauschrohrsegmente (206) der Vielzahl von abgeflachten Wärmetauschrohranordnungen (204), wodurch eine Endanordnung gebildet wird; und
Verbinden der Endanordnung durch Löten in einem Lötofen.

14. Verfahren zum Herstellen eines Rippenwärmetauschers mit abgeflachten Rohren nach Anspruch 13, das weiterhin das Bereitstellen einer Aussparung (232) in jedem Längsende des Stegelements (40) umfasst, wobei die Aussparung (232) eine longitudinale Tiefe aufweist, die vorausgewählt wurde, um eine Eindringtiefe der Enden des ersten und des zweiten Wärmetauschrohrsegments (106, 206) in die entsprechenden Verteiler (102, 104, 202, 204) zu begrenzen.

15. Verfahren zum Herstellen eines Rippenwärmetauschers mit abgeflachten Rohren nach Anspruch 14, das weiterhin das Verbinden des zweiten Verteilers (204), der an den zweiten Enden der zweiten Wärmetauschrohrsegmente (206) der Vielzahl von abgeflachten Wärmetauschrohranordnungen montiert ist, in Fluidkommunikation mit dem zweiten Verteiler (104), der an den zweiten Enden der ersten Wärmetauschrohrsegmente (106) der Vielzahl von abgeflachten Wärmetauschrohranordnungen montiert ist, durch eine externe Leitung (224) umfasst,
wobei die externe Leitung (224) insbesondere generell U-förmig ist und das Verfahren insbesondere weiterhin das vorübergehende Positionieren eines Blocks (230) zwischen der externen Leitung (224) und den zweiten Verteilern (104, 204) umfasst, wobei der Block (230) eine Abmessung aufweist, die vorausgewählt ist, um die Eindringtiefe eines ersten Endes und eines zweiten Endes der externen Leitung (224) in die entsprechenden zweiten Verteiler (104, 204) zu begrenzen.

## Revendications

1. Assemblage de tubes d'échange de chaleur (300) comprenant :
un premier segment de tube d'échange de chaleur aplati (106) s'étendant longitudinalement ;
un deuxième segment de tube d'échange de chaleur aplati (206) s'étendant longitudinalement en relation alignée espacée avec ledit premier segment de tube d'échange de chaleur aplati (106) ; et
un organe d'âme (40) s'étendant entre et raccordant un bord de fuite (110) dudit premier segment de tube d'échange de chaleur (106) et un bord d'attaque (208) dudit deuxième segment de tube d'échange de chaleur (206) ;
dans lequel ledit organe d'âme (40) a au moins une ouverture de purge (42) s'étendant au travers
**caractérisé en ce que** ladite au moins une ouverture de purge (42) est positionnée décentrée pour être à proximité du bord de fuite (110) dudit premier segment de tube d'échange de chaleur (106) ou à proximité du bord d'attaque (208) dudit deuxième segment de tube d'échange de chaleur (206).

2. Assemblage de tubes d'échange de chaleur (300) selon la revendication 1, dans lequel ledit premier segment de tube d'échange de chaleur aplati (106), ledit deuxième segment de tube d'échange de chaleur (206), et ledit organe d'âme (40) sont formés par un processus d'extrusion sous forme d'assemblage de tubes monoblocs d'un seul tenant.

3. Assemblage de tubes d'échange de chaleur (300) selon la revendication 1, dans lequel ledit organe d'âme (40) a une pluralité d'ouvertures de purge (42) s'étendant au travers et disposées à des intervalles longitudinaux espacés.

4. Assemblage de tubes d'échange de chaleur (300) selon la revendication 1, dans lequel ladite au moins une ouverture de purge (42) comprend une fente ou un trou,
dans lequel ladite au moins une ouverture de purge (42) comprend en particulier une fente ayant une longueur et une largeur et un rapport longueur sur largeur dans la plage de 1 à 80,
ou une fente allongée longitudinalement ayant une longueur et un rapport entre la longueur de fente et une largeur dudit organe d'âme (40) dans la plage de 0,5 à 10.

5. Assemblage de tubes d'échange de chaleur (300) selon la revendication 1, dans lequel ledit organe d'âme (40) a une largeur et une épaisseur et un rapport épaisseur sur largeur dans la plage de 0,02 à 0,5.

6. Assemblage de tubes d'échange de chaleur (300) selon la revendication 1, dans lequel ledit organe d'âme (40) est lié métallurgiquement audit premier segment de tube d'échange de chaleur (106) et audit deuxième segment de tube d'échange de chaleur (206) et a au moins une ouverture de purge (42) s'étendant au travers.

7. Assemblage de tubes d'échange de chaleur (300) selon la revendication 1, dans lequel ledit organe d'âme (40) comprend une pluralité de segments d'âme raccourcis (40) disposés à des intervalles espacés longitudinalement suivant la longueur longitudinale de et liés métallurgiquement audit premier segment de tube d'échange de chaleur (106) et audit deuxième segment de tube d'échange de chaleur (206), ladite pluralité de segments d'âme (40) étant espacés pour former une pluralité d'ouvertures de purge (42) entre ledit premier segment de tube d'échange de chaleur (106) et ledit deuxième segment de tube d'échange de chaleur (206).

8. Assemblage de tubes d'échange de chaleur (300) selon la revendication 1, comprenant en outre un troisième segment de tube d'échange de chaleur aplati s'étendant longitudinalement en relation alignée espacée entre et avec ledit premier segment de tube d'échange de chaleur (106) et ledit deuxième segment de tube d'échange de chaleur (206), ledit organe d'âme (40) comportant une première section et une seconde section, la première section s'étendant entre et raccordant le bord de fuite (110) dudit premier segment de tube d'échange de chaleur (106) à un bord d'attaque dudit troisième segment de tube d'échange de chaleur et la seconde section s'étendant entre et raccordant un bord de fuite dudit troisième segment de tube d'échange de chaleur au bord d'attaque (208) dudit deuxième segment de tube d'échange de chaleur (206).

9. Assemblage de tubes d'échange de chaleur (300) comprenant :
un segment de tube d'échange de chaleur aplati vers l'avant (106) s'étendant longitudinalement ;
un segment de tube d'échange de chaleur aplati (206) s'étendant aligné longitudinalement avec et espacé vers l'arrière dudit segment de tube d'échange de chaleur vers l'avant (106) ;
une pluralité de segments de tube d'échange de chaleur aplatis (406) déployés en relation alignée espacée entre ledit segment de tube d'échange de chaleur vers l'avant (106) et ledit segment de tube d'échange de chaleur vers l'arrière (206) ;
un premier organe d'âme (40-1) s'étendant entre et raccordant un bord de fuite (110) dudit segment de tube d'échange de chaleur vers l'avant (106) à un bord d'attaque (408) d'un premier de ladite pluralité de segments de tube d'échange de chaleur intermédiaires (406) ;
un second organe d'âme (40-2) s'étendant entre et raccordant un bord de fuite (410) d'un dernier de ladite pluralité de segments de tube d'échange de chaleur intermédiaires (406) et un bord d'attaque (208) dudit segment de tube d'échange de chaleur vers l'arrière (206) ; et
une pluralité d'organes d'âme intermédiaires disposés en alternance entre ladite pluralité de segments de tube d'échange de chaleur intermédiaires (406), chaque organe d'âme intermédiaires de ladite pluralité d'organes d'âme intermédiaires s'étendant entre et raccordant un bord de fuite (410) d'un segment respectif de ladite pluralité de segments de tube d'échange de chaleur intermédiaires (406) et un bord d'attaque (408) d'un autre segment respectif de ladite pluralité de segments de tube d'échange de chaleur (406) ;
dans lequel au moins l'un dudit organe d'âme (40-1, 40-2) a au moins une ouverture de purge (42) s'étendant au travers
**caractérisé en ce que** ladite au moins une ouverture de purge (42) est positionnée décentrée pour être à proximité du bord de fuite (110) d'un segment de tube d'échange de chaleur (106, 406) adjacent ou à proximité du bord d'attaque (208) d'un segment de tube d'échange de chaleur (206, 406) adjacent.

10. Échangeur de chaleur à plaques multiples comprenant :
une pluralité d'assemblages de tubes d'échange de chaleur aplatis à tubes multiples selon l'une des revendications précédentes disposés en relation parallèle espacée.

11. Échangeur de chaleur à plaques multiples selon la revendication 10, comprenant en outre :
un premier collecteur (102) monté en communication d'écoulement fluidique sur une première extrémité respective de chacun des premiers segments de tube d'échange de chaleur aplatis (106) de la pluralité d'assemblages de tubes d'échange de chaleur et un second collecteur (104) en communication d'écoulement fluidique sur une seconde extrémité respective de chacun des premiers segments de tube d'échange de chaleur aplatis (106) de la pluralité d'assemblages de tubes d'échange de chaleur, formant ainsi une première plaque d'échangeur de chaleur (100) ; et
un premier collecteur (202) monté en communication d'écoulement fluidique sur une première extrémité respective de chacun des deuxièmes segments de tube d'échange de chaleur aplatis (206) de la pluralité d'assemblages de tubes d'échange de chaleur et un second collecteur (204) en communication d'écoulement fluidique sur une seconde extrémité respective de chacun des deuxièmes segments de tube d'échange de chaleur aplatis (206) de la pluralité d'assemblages de tubes d'échange de chaleur, formant ainsi une seconde plaque d'échangeur de chaleur (200).

12. Échangeur de chaleur à plaques multiples selon la revendication 11, comprenant en outre :
une ailette pliée (32) disposée entre chaque jeu d'assemblages d'échange de chaleur voisins de ladite pluralité d'assemblages de tubes d'échange de chaleur espacés parallèles, chaque ailette pliée (320) s'étendant entre les premier et deuxième segments de tube aplatis (106, 206) à la fois de ladite première plaque d'échangeur de chaleur (100) et de ladite seconde plaque d'échangeur de chaleur (200) et couvrant lesdits organes d'âme (40, 40-1, 40-2).

13. Procédé de fabrication d'un échangeur de chaleur à ailettes à tubes aplatis selon les revendications précédentes ayant au moins un premier faisceau de tubes et un second faisceau de tubes, le procédé comprenant les étapes de :
déploiement d'une pluralité d'assemblages de tubes d'échange de chaleur aplatis à tubes multiples (240) en relation espacée parallèle, chaque assemblage de tubes d'échange de chaleur (240) comportant un premier segment de tube d'échange de chaleur aplati (106) s'étendant longitudinalement, un deuxième segment de tube d'échange de chaleur aplati (206) s'étendant longitudinalement en relation alignée espacée avec ledit premier segment de tube d'échange de chaleur aplati (106), et un organe d'âme (40, 40-1, 40-2) s'étendant entre et raccordant un bord de fuite (110) dudit premier segment de tube d'échange de chaleur (106) et un bord d'attaque (208) dudit deuxième segment de tube d'échange de chaleur (206), ledit organe d'âme (40, 40-1, 40-2) comprenant au moins une ouverture de purge (42) s'étendant au travers et étant positionnée décentrée pour être à proximité du bord de fuite (110) dudit premier segment de tube d'échange de chaleur (106) ou à proximité du bord d'attaque (208) dudit deuxième segment de tube d'échange de chaleur (206) ;
disposition d'une ailette pliée (320) entre chaque paire d'assemblages de tubes d'échange de chaleur aplatis parallèles (240) pour former un ensemble d'ailette et de tube partiellement assemblés ;
compression de l'ensemble d'ailette et de tube assemblés entre des barres de brasage d'extrémité ;
montage d'un premier collecteur (102) sur une première extrémité respective de chacun des premiers segments d'échange de chaleur aplatis (106) de la pluralité d'assemblages de tubes d'échange de chaleur aplatis (204), montage d'un second collecteur (104) sur une seconde extrémité respective de chacun des premiers segments d'échange de chaleur aplatis (106) de la pluralité d'assemblages de tubes d'échange de chaleur aplatis (204), montage d'un premier collecteur (202) sur une première extrémité respective de chacun des deuxièmes segments de tube d'échange de chaleur aplatis (206) de la pluralité d'assemblages de tubes d'échange de chaleur aplatis (204), et montage d'un second collecteur (204) sur une seconde extrémité respective de chacun des deuxièmes segments de tube d'échange de chaleur (206) de la pluralité d'assemblages de tubes d'échange de chaleur aplatis (204), formant ainsi un assemblage final ; et
liaison de l'assemblage final par brasage dans un four de brasage.

14. Procédé de fabrication d'un échangeur de chaleur à ailettes à tubes aplatis selon la revendication 13, comprenant en outre la fourniture d'une encoche (232) dans chaque extrémité longitudinale de ladite âme (40), l'encoche (232) ayant une profondeur longitudinale présélectionnée pour limiter une profondeur d'insertion des extrémités des premier et deuxième segments de tube d'échange de chaleur (106, 206) dans les collecteurs (102, 104, 202, 204) respectifs.

15. Procédé de fabrication d'un échangeur de chaleur à ailettes à tubes aplatis selon la revendication 14, comprenant en outre le raccordement du second collecteur (204) monté sur les secondes extrémités des deuxièmes segments de tube d'échange de chaleur (206) de ladite pluralité d'assemblages de tubes d'échange de chaleur aplatis en communication fluidique avec le second collecteur (104) monté sur les secondes extrémités des premiers segments de tube d'échange de chaleur (106) de ladite pluralité d'assemblages de tubes d'échange de chaleur aplatis à travers un conduit externe (224),
dans lequel le conduit externe (224) en particulier est en forme générale de U et le procédé en particulier comprend en outre le positionnement temporaire d'un bloc (230) entre le conduit externe (224) et lesdits seconds collecteurs (104, 204), le bloc (230) ayant une dimension présélectionnée pour limiter la profondeur d'insertion d'une première extrémité et d'une seconde extrémité du conduit externe (224) dans les seconds collecteurs (104, 204) respectifs.
